# EUROPEAN PATENT APPLICATION

(11) **EP 2 354 192 A1**
(43) Date of publication of application: **10.08.2011**
(21) Application number: 10197361.8
(22) Date of filing: 30.12.2010
(51) Int. Cl.: C09D 5/00, C09D 7/00

(54) **Aqueous-phase painting**

(30) Priority: 01.02.2010 IT TO20100069
(71) Applicant: Candis S.r.l., 10020 Andezeno (Torino) (IT)
(72) Inventor: Gilli, Alberto, 10020, Andezeno (Torino) (IT)
(74) Representative: Buzzi, Franco

(57) **Abstract**

Aqueous-phase painting product comprising a white or coloured undercoat paint, a neutral base paint, at least one toner or fraction thereof to be mixed with the neutral base paint, and at least two groups of flakes to be mixed with the base paint and the toner. The two groups of flakes are both coloured with colours or tonalities contrasting from each other.

## Description

The subject of the present invention is an aqueous-phase painting product and a method for decorating a surface, typically of a wall structure, using such painting product.

Over the years, the Applicant has been successfully producing and selling aqueous-phase painting products which allow obtaining - on the surfaces decorated therewith - particular and unique aesthetic effects for example multicolours, with intense colour tones and slight shades, as well as spotted and old looking, such as for example in the case of the product referred to as "Antiche Terre Fiorentine", from patent documents EP-B-1004638 and EP-A-1477533.

In these prior art paints the abovementioned decorative effects are obtained by using - in aqueous phase - white monochromatic flakes which, when laying out the painting product, break producing white spots and streaks on the base, usually coloured.

In some variants of the "Antiche Terre Fiorentine" paints, for example called "Comete" and "Effetti", coloured flakes - even multichromatic, which after laying out the paint generate coloured spot effects which combine with those generated by the white flakes
- are added to the white monochromatic flakes.

The object of the present invention is that of providing a new aqueous-phase painting product capable of obtaining, following laying out thereof, unique and distinctive decorative effects which are considerably distinguished from those that can be obtained using the previously mentioned products of the prior art.

According to the invention, this object is attained due to an aqueous-phase painting product comprising:
- a white or coloured undercoat paint,
- a neutral base paint,
- at least one toner or fraction thereof to be mixed with said neutral base paint,
- at least two groups of flakes to be mixed with said neutral base paint and said toner, said two groups of flakes being both coloured with colours or tonalities contrasting from each other.

The colours of the abovementioned at least two groups of coloured flakes are conveniently one lighter and the other darker, and the toner is preferably light coloured. The two or more groups of coloured flakes can have colours or tonalities contrasting relative to the colour of the toner.

Due to this solution idea, when the aqueous-phase painting product according to the invention is laid on the surface to be decorated while applying a pressure sufficient to cause the breaking of at least part of the coloured flakes and embodying the respective colours in the neutral base paint mixed with the toner, it allows obtaining particularly unique decorative effects and which are particularly distinctive compared to other paints of the prior art mentioned previously, especially due to the absence of white spots and streaks derived - as mentioned - in such prior art painting products from white monochromatic flakes.

The invention also has the object of a method for decorating a surface using an aqueous-phase painting product, essentially characterised in that it comprises the following steps:
- providing and applying on the surface at least one coat of a white or coloured undercoat paint and awaiting drying thereof,
- providing a neutral base paint, at least one toner or fraction thereof and at least two groups of flakes both coloured with colours or tonalities contrasting from each other,
- mixing said neutral base paint with said at least one toner and with said two groups of coloured flakes,
- laying out the mixture thus obtained on the dried white or coloured undercoat paint, while applying a pressure sufficient to cause the breaking of at least part of said coloured flakes and embodying the respective colours in the neutral base paint with said at least one toner so as to create the final decorative effect.

Laying out the mixture formed by the neutral base paint coloured with the toner and the groups of coloured flakes can be carried out using a brush, a roller, a putty knife, a trowel, a glove, fabric, rubber, spraying and also with combinations thereof.

Now, the invention shall be described in detail as follows.

The aqueous-phase painting product according to the invention comprises a white or coloured undercoat paint, of the generally conventional type, and a neutral base paint to which at least one toner, i.e. a liquid to which at least one toner, or a coloured liquid also of the conventional type, is added. The toner is usually available on the market in standard capacity vials, for example 250ml vials, whose content is not necessarily added to the neutral base paint: actually, a fraction of such content can be enough.

The painting product further comprises at least one first group of flakes and one second group of flakes, for example of the type described in the previously mentioned documents of the Applicant's patent EP-1004638B and EP-1477533A. The sole difference lies in the fact that the flakes of each group are both coloured, instead of white, and the colour of the flakes of one group is lighter with respect to the colour of the flakes of the other group, which is darker. The toner that can be used for mixing with the neutral base paint is conveniently but not necessarily light, and the colours of the two groups of flakes are preferably both of tonalities contrasting with the colour of the toner.

Following are representative but non-limiting examples of the different colours:
- flakes of the first group yellow, flakes of the second group black, base paint grey;
- flakes of the first group orange, flakes of the second group amaranth, base paint yellow;
- flakes of the first group light green, flakes of the second group dark green, base paint pink.

The percentages of the components of the neutral base paint/flakes mixture can typically be the following:
- base paint between 40 and 80%,
- each group of flakes between 10 and 30%.

It can be observed that further additional groups of flakes of colours or tonalities different with respect to those of the first and of the second group of flakes, can be provided for as long as they are not white.

Furthermore, further additives can be provided for to confer particular decorative effects after laying out the painting product, such as for example metal pigments, metallization, pearlescent, iridescent, phosphorescent, fluorescent or analogous pigments.

Furthermore, the neutral base paint can be both transparent and made opaque, and at least one group of flakes can have a metalized colour (for example golden or silver-plated) and include possible pearlescent, iridescent, fluorescent, phosphorescent pigments and the like.

Following is the method for decorating a surface using the painting product according to the invention.

First at least one coat of the white or coloured undercoat paint is laid out on the surface, and then wait for drying thereof.

Then, after mixing the neutral base paint with at least one toner or fraction thereof and at least the two groups of flakes of colours or tonalities different and contrasting from each other, the mixture thus obtained is laid out on dried undercoat paint, while applying a pressure sufficient to cause the breaking of at least part of the coloured flakes, hence obtaining the spreading and embodying on the coloured base paint so as to create the particular final decorative effect. Laying out can be carried out using a brush, a putty knife, a trowel, a glove, a roller, a sponge, fabric, rubber and also spraying, or through combinations thereof.

Obviously, both the components of the painting product and the method of application can vary with respect to what has been described and illustrated, as long as suitable to obtain the described new and unique aesthetic effects, without departing from the scope of protection of the present invention as defined in the claims that follow.

## Claims

1. An aqueous-phase painting product comprising:
- a white or coloured undercoat paint,
- a neutral base paint,
- at least one toner or fraction thereof to be mixed with said neutral base paint,
- at least two groups of flakes to be mixed with said neutral base paint and toner, said two groups of flakes being both coloured with colours or tonalities contrasting from each other.

2. Aqueous-phase painting product according to claim 1, **characterized in that** the colours of said at least two groups of coloured flakes are one lighter and the other darker.

3. Aqueous-phase painting product according to claim 1 or 2, **characterized in that** said toner is light coloured.

4. Aqueous-phase painting product according to any one of claims 1 through 3, **characterized in that** said at least two groups of flakes are coloured with colours or tonalities contrasting relative to the colour of said toner.

5. Aqueous-phase painting product according to any one of claims 1 through 4, **characterized in that** said neutral base paint is at an amount comprised between about 40 and 80% of the mixture neutral base paint / flakes, and each group of flakes is at an amount comprised between about 10 and 30% of said mixture.

6. A method for decorating a surface with an aqueous-phase painting product, **characterized in that** it comprises the following steps:
- providing and applying at least one coat of a white or coloured undercoat paint onto said surface and awaiting drying thereof,
- providing a neutral base paint, at least one toner or fraction thereof and at least two groups of flakes both coloured with colours or tonalities contrasting from each other,
- mixing said neutral base paint with said at least one toner and with said two groups of coloured flakes,
- laying out the mixture so provided onto the dried white or coloured undercoat paint, while applying a pressure sufficient to cause breaking of at least part of said coloured flakes and embodying the respective colours thereof into the neutral base paint with said at least one toner so as to create the final decorative effect.

7. Method according to claim 6, **characterized in that** the colours of said at least two groups of coloured flakes are one lighter and the other darker.

8. Method according to claim 6 or 7, **characterized in that** said toner is of a light colour.

9. Method according to any one of claim 6 through 8, **characterized in that** said at least two groups of flakes are coloured with colours or tonalities contrasting relative to the colour of said toner.

10. Method according to any one of claim 6 through 9, **characterized in that** said neutral base paint is at an amount comprised between about 40 and 80% of the neutral base paint / flakes mixture, and each group of flakes is at an amount comprised between about 10 and 30% of said mixture.

11. Method according to any one of claim 6 through 10, **characterized in that** the step of laying out said mixture is carried out by means of a brush, a putty knife, a trowel, a glove, a roller, a sponge, fabric, rubber, spraying or combinations thereof.
